# EUROPÄISCHE PATENTSCHRIFT

(11) **EP 1 239 266 B1**
(45) Veröffentlichungstag und Bekanntmachung des Hinweises auf die Patenterteilung: **20.12.2006**
(21) Anmeldenummer: 02001288.6
(22) Anmeldetag: 18.01.2002
(51) Int. Cl.: G01D 11/24, G01K 1/08

(54) **Verfahren zur Herstellung eines Gehäuses für Sensorelemente, sowie Sensor, und dessen Verwendung**
Process for manufacturing a sensorhousing, sensor and the use thereof
Procédé de fabrication d'un boitier pour capteur, capteur et son utilisation

(30) Priorität: 09.03.2001 DE 10111657
(43) Veröffentlichungstag der Anmeldung: 11.09.2002
(73) Patentinhaber: Heraeus Electro-Nite International N.V., 3530 Houthalen (BE)
(72) Erfinder: Damaschke, Gerhard, 65439 Flörsheim (DE)
(74) Vertreter: Kühn, Hans-Christian

(56) Entgegenhaltungen:
- DE-A1- 19 857 880
- DE-C2- 19 621 000
- US-A- 4 823 605

## Beschreibung

Die Erfindung betrifft ein Verfahren zur Herstellung eines Gehäuses für Sensorelemente mit wenigstens einem Kunststoff aufweisenden äußeren Gehäuseteil, sowie einen Sensor und dessen Verwendung als Temperatur-Sensor.

DE 198 57 880 A1 offenbart einen Sensor mit einem inneren Kern aus einem weichen Kunststoff und einer äußeren Schale aus einem harten Kunststoff, wobei der weiche Kunststoff das Sensorelement nach innen zum Kern der Vorrichtung hin abdeckt. Nach außen wird das Sensorelement lediglich von einem harten Kunststoff abgedeckt, der auch den weichen Kunststoffkem so abdeckt, dass dieser auf der Seite eines IC-Moduls frei bleibt, so dass der Erfassungsabschnitt an dem oberen Ende aus dem Gehäuse herausragt

Im folgenden werden Kunststoffkomponenten mit nachgiebigen bzw. gummiartigen Eigenschaften - wie z. B. thermoplastische Elastomere oder Elaste bzw. TPE - als weiche Kunststoffkomponenten bezeichnet, während Kunststoffkomponenten, die nach ihrer Herstellung praktisch keine Verformbarkeit mehr aufweisen - wie z. B. Polyamid oder PPS - als harte gegebenenfalls auch als härtbare Kunststoffkomponenten oder als hartes Material einer Kunststoffumspritzung beschrieben werden.

Aus der DE 197 57 006 A1 ist ein Verfahren zur Herstellung von Messwertaufnehmem mit einem Sensorelement und einem Kunststoff aufweisenden Gehäuse bekannt,, wobei ein sogenanntes "Molded Interconnected Device (MID)"-Herstellungsverfahren angewendet wird. Dabei wird in einem ersten Verfahrensschritt des Molded Interconnected Device (MID)"-Herstellungsverfahrens zunächst ein mit Palladium gefülltes Trägerteil spritzgegossen. In einem zweiten Verfahrensschritt werden die Bereiche des Trägerteils, an denen keine elektrisch leitenden Verbindungen entstehen sollen, mit einer Kunststoff-Schutzschicht bespritzt. In einem dritten Verfahrensschritt werden sodann die elektrischen Verbindungsleitungen galvanisch auf die nicht umspritzte Oberfläche des Trägerteils aufgebracht, wodurch sich die Leiterbahnen herausbilden. In einem vierten Verfahrensschritt wird das Sensorelement und die zugehörige Messschaltung angebracht. Die somit montierten Bauelemente können im Bereich des Sensorelements noch mit einem Kunststoff- oder Keramikdeckel abgedeckt, verklebt oder wamwerstemmt werden. Anschließend wird in einem fünften und letzten Verfahrensschritt die gesamte Anordnung mit Kunststoff umspritzt.

Es handelt sich dabei um ein verhältnismäßig aufwendiges Herstellungsverfahren.

Weiterhin ist aus der EP 0 539 555 B1 eine Gehäusebildung um eine Funktionseinrichtung herum bekannt, wobei als Funktionseinrichtung beispielsweise ein Halbleiterelement, ein auf einem Halbleiter basierendes Element, ein Sensorelement, ein Mikrostellglied oder eine elektronische Schaltung bestehend aus einer oder mehreren integrierten Schaltungen in Frage kommt; das Gehäuse bildet mindestens einen verschlossenen Hohlraum, der die Funktionseinrichtung entweder ganz oder teilweise umgibt, wobei Metallteile durch die Wände des Gehäuses verlaufen und Drahtverbindungen zu der vom Gehäuse umgebenen Funktionseinrichtung bilden; der Hohlraum ist dabei abgedichtet und mit einem elektrisch isolierenden Fluid gefüllt; das Gehäuse ist aus einer Kunststoff-Formmasse hergestellt, wobei die Kunststoff-Formmasse ein Thermoplast ist, und zumindest Teile der die Funktionseinrichtung umgebenden Wände nachgiebig gestaltet sind, um Expansionskräfte aufzunehmen.

Zur Gehäusebildung wird um eine solche Funktionseinrichtung das umgebende Gehäuse durch zwei oder mehr Bestandsteile gebildet. Beim Zusammensetzen entsteht dann zumindest ein Hohlraum.

Es handelt sich hierbei um einen verhältnismäßig komplexen Aufbau, dessen Realisierung mit verhältnismäßig hohen Kosten verbunden ist.

Weiterhin ist aus der DE 196 21 000 C2 ein Temperatur-Sensor bekannt, der einen Messwiderstand aus einem Substrat mit elektrisch isolierender Oberfläche und darauf befindlicher Widerstandsschicht aufweist und von einer Umhüllung aus temperaturbeständigem Kunststoff sowie einem zusätzlichen Außengehäuse aus Kunststoff umgeben ist, wodurch auch die Anschlussleiter des Messwiderstandes geführt sind; die Umhüllung dient als Primärgehäuse, das zusammen mit dem eingebetteten Messwiderstand in Form einer Widerstandsschicht von einer Kunststoff-Umspritzung als Außengehäuse umgeben ist; dabei sind die Anschlussleiter durch die Kunststoff-Umspritzung nach außen geführt, der Messwiderstand ist als SMD-Teil ausgebildet und mittels der Kunststoff-Umhüllung gegenüber seiner Umgebung versiegelt. Somit sind wenigstens zwei der Anschlussleiter zwischen dem Messwiderstand und den äußeren Anschlusskontakten gas- und flüssigkeitsdicht durch die Kunststoff-Umhüllung und die Kunststoff-Umspritzung geführt, so dass der Sensor auch gegenüber der Umgebungsatmosphäre versiegelt ist.

Als problematisch erweist es sich, dass bei Erstarren der Kunststoff-Umspritzung der Messwiderstand aufgrund von Schrumpfungsprozessen in seiner Genauigkeit beeinträchtigt werden kann.

Aufgabe der Erfindung ist es, ein Verfahren zur Direktgehäusung von Sensoren, insbesondere von Temperatur-Sensoren auf Widerstands-Basis, anzugeben, wobei eine hohe Genauigkeit des Sensorelements aufrecht erhalten wird; weiterhin soll ein nach dem Verfahren hergestellter Sensor angegeben werden.

Die Aufgabe wird verfahrensgemäß dadurch gelöst, dass das Gehäuse im Zwei-Komponenten-Spritzguss-Verfahren hergestellt wird, wobei in einem ersten Verfahrensschritt das Sensorelement von einer weichen Kunststoffkomponente umspritzt und in einem zweiten Verfahrensschritt eine zweite Kunststoffkomponente aufgebracht wird, die als harte KunststoffKomponente das äußere Gehäuse für das Sensorelement bildet.

Vorteilhafte Ausgestaltungen des Verfahrens nach Anspruch 1 sind in den Ansprüchen 2 bis 4 angegeben.

Als besonders vorteilhaft erweist es sich, dass aufgrund der weichen Komponente keinerlei Schrumpfungsprozesse auf das Sensorelement- und damit auf seine Genauigkeit - einwirken.

Ein weiterer Vorteil ist darin zu sehen, dass kundenspezifische Lösungen - beispielsweise Spezial-Stecker - zum elektrischen Anschluss des Sensors aufgebracht werden können.

In einer bevorzugten Ausgestaltung des Verfahrens wird das Sensorelement mit wenigstens zwei Anschluss-Leitern versehen, die wenigstens teilweise von der weichen Kunststoffkomponente umspritzt werden.

Vorteilhafterweise werden die Anschlussleiter des Sensorelements zusammen mit Verbindungspunkten für eine äußere Zuleitung von der weichen Kunststoffkomponente umspritzt.

In der Praxis wird in einem ersten Verfahrensschritt das Sensorelement mit einem Elastomer oder Elast umspritzt.

Die Aufgabe wird vorrichtungsgemäß für einen Sensor, insbesondere Temperatur-Sensor, mit einem Sensorelement, das von einem, wenigstens eine Kunststoffkomponente aufweisenden Gehäuse umgeben ist, dadurch gelöst, dass das Sensorelement von einer weichen Kunststoffkomponente umhüllt ist, die ihrerseits in einer als äußeres Gehäuse dienenden Kunststoffkomponente als Umspritzung aus einem harten Material angeordnet ist.

Die Aufgabe wird weiterhin für einen Sensor, insbesondere Temperatur-Sensor, mit einem Messwiderstand als Sensorelement auf einem Substrat mit elektrisch isolierender Oberfläche und darauf befindlicher Widerstandsschicht, wobei der Messwiderstand von einem Gehäuse aus harter Kunststoffformmasse umgeben ist, dadurch gelöst, dass der Messwiderstand von einer weichen Kunststoffkomponente umhüllt ist, die ihrerseits in einer als äußeres Gehäuse dienenden Kunststoffkomponente als Umspritzung aus einem harten Material angeordnet ist.

Vorteilhafte Ausgestaltungen des Sensors sind in den Ansprüchen 7 bis 9 angegeben.

In einer bevorzugten Ausgestaltung des Sensors wird der Messwiderstand über wenigstens zwei Anschluss-Leiter mit einer von außen anschließbaren Auswerteschaltung verbunden, wobei die Anschlussleiter wenigstens teilweise von der weichen Kunststoffkomponente umhüllt sind; dabei sind vorteilhafterweise die Anschlussleiter sowohl durch die weiche als auch durch die härtbare Kunststoffkomponente geführt.

Für kundenspezifische Einsätze ist wenigstens ein Ende eines Anschlussleiters mit einem Ende eines Steckers mechanisch und elektrisch verbunden.

Die Aufgabe wird für einen Sensor nach den Ansprüchen 5 bis 9 verwendungsgemäß dadurch gelöst, dass er als Temperatursensor eingesetzt wird.

Im folgenden ist der Gegenstand der Erfindung anhand der Figuren 1a, 1b, 2 und 3 näher erläutert.

Figur 1a zeigt einen Messwiderstand als Sensorelement, das nur von einer weichen Kunststoffkomponente umspritzt ist (gemäß 1. Verfahrensschritt).

Figur 1b zeigt einen Messwiderstand als Sensorelement, auf den zusätzlich eine harte Kunststoffkomponente aufgebracht ist, die das äußere Gehäuse für das Sensorelement bildet (gemäß 2. Verfahrensschritt).

Die Zuleitung ist z. B. als zweiadriges Kabel ausgeführt, wobei die als Umhüllung des Messwiderstands dienende weiche Kunststoffkomponente im Längsschnitt dargestellt ist, es ist aber auch jede andere Art Anschlusskabel oder Einzeladern einsetzbar.

Figur 2 zeigt eine ähnliche Ausführung wie Figur 1b, wobei hier jedoch ein zusätzliches kundenspezifisches Steckersystem am Ende einer Zuleitung angeordnet ist.

Figur 3 zeigt einen Sensor als Messwiderstand mit Anschlussleitungen, die direkt an Verbindungsstellen mit Kontaktstiften verbunden sind.

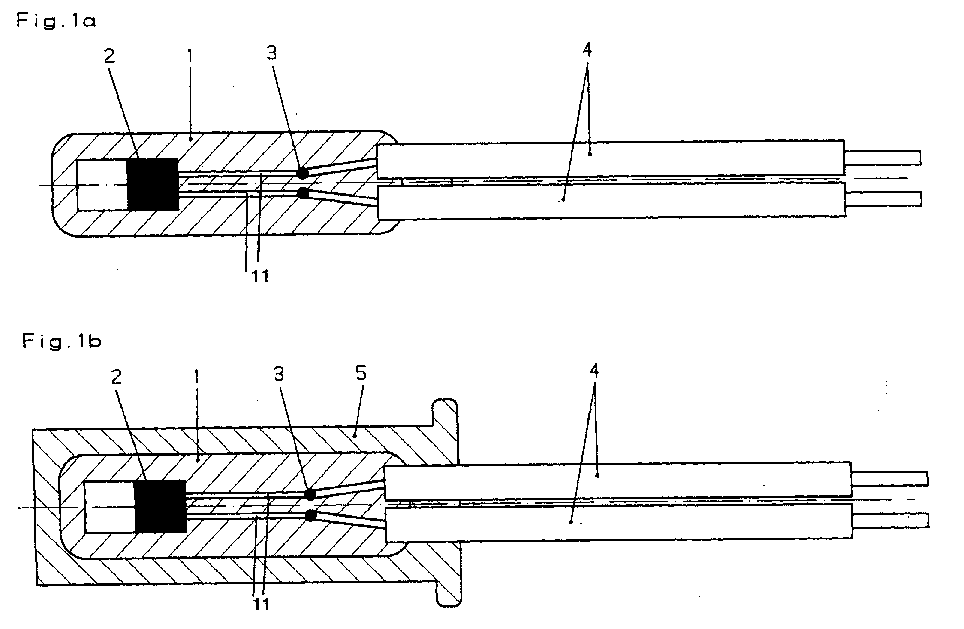

Gemäß Figur 1a und 1b erfolgt die Direktgehäusung des als Messwiderstand 2 ausgebildeten Sensorelements in einem Zweikomponenten-Spritzgussverfahren, wobei im ersten Verfahrensschritt (Figur 1a) eine weiche Kunststoffkomponente 1 um den Messwiderstand 2 gespritzt wird und eine mit einer Zuleitung 4 verbundene Verbindungsstelle 3 mit Anschluss-Leitern 11 zu Messwiderstand 2 verbunden wird. Nach Figur 1a sind somit sowohl Messwiderstand 2, Verbindungspunkt 3 als auch das Ende der Zuleitung 4 von der weichen Kunststoffkomponente 1, die hier im Längsschnitt symbolisch durch gestrichelte Linien dargestellt ist, umspritzt. Auf diese weiche Kunststoffkomponente 1 wird gemäß Figur 1b sodann eine äußere harte, gegebenenfalls härtbare Komponente 5 aufgespritzt, welche für ein temperaturbeständiges ausreichend gehärtetes Außengehäuse sorgt, so dass der Sensor auch für Temperaturen bis zu einem Bereich von 130 bis 150 °C beständig ist.

Als Werkstoff für die weiche Komponente wird vorzugsweise TPE (thermoplastisches Elastomer) eingesetzt, während die äußere harte Komponente 5 vorzugsweise aus PA (Polyamid) oder PPS (Polyphenylensulfid) besteht.

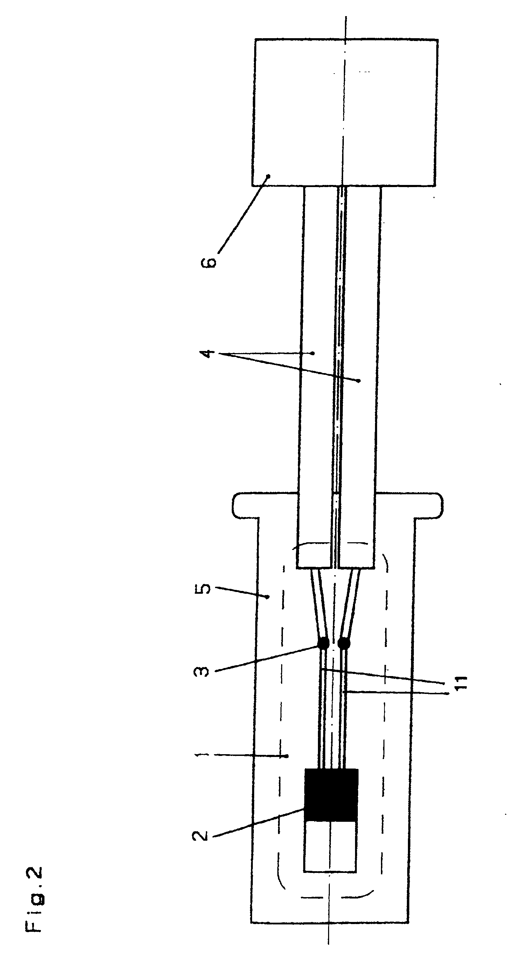

Die in Figur 2 dargestellte Ausführungsform entspricht im wesentlichen der aus Figur 1b bekannten Anordnung, wobei hier jedoch am Ende von Zuleitung 4 ein kundenspezifisches Steckersystem 6 aufgebracht ist, so dass der komplette Sensor als schnell austauschbares Messelement in ein komplettes Regel- bzw. Messsystem integriert ist. So wird beispielsweise bei Einsatz von Temperatursensoren ein vorab geglichener Messwiderstand 2 eingesetzt, der sich mit Hilfe des Steckersystems 6 auf einfache Art und Weise in eine kundenspezifische Auswerte- bzw. Messeinrichtung integrieren lässt. Es ist jedoch auch möglich, einen anderen Sensor-z. B. einen NTC - einzusetzen.

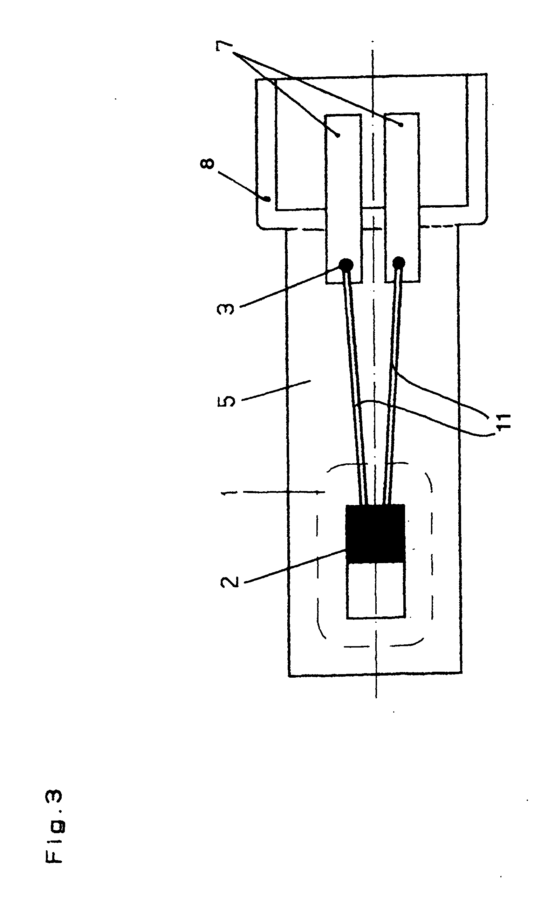

Gemäß Figur 3 ist der als Sensorelement dienende Messwiderstand 2 von einem verhältnismäßig kleinen Volumen der weichen Kunststoffkomponente 1 umgeben, wobei aus der Kunststoffkomponente 1 die Anschlussdrähte 11 des Messwiderstandes 2 direkt zu Verbindungspunkten 3 auf Kontaktstiften 7 führen, die als Teil eines Steckersystems 8 ausgebildet sind. die das äußere Gehäuse des Sensorelements bildende harte Kunststoffkomponente ist mit Bezugszeichen 5 gekennzeichnet.

Auch hier handelt es sich um eine kundenspezifische Ausführungsform, die in der Praxis aufgrund des Steckersystems als Einlegeteil irgendwelche Verwechslungsmöglichkeiten praktisch ausschließt. Aufgrund der einzelnen Bestandteile der Ausführungsform gemäß Figur 3 lässt sich ein solcher Sensor auch beim Kunden mit spezifischen Merkmalen versehen, so dass das Sensorelement als Teil einer kompletten mess- bzw. regelungstechnischen Anlage bzw. Auswerteeinheit einsetzbar ist. Da der Messwiderstand 2 bereits zuvor einjustiert ist, kann hier ein rascher Wechsel bei Sensorausfall durch den jeweiligen Anwender erfolgen, ohne dass zum Austausch besondere Spezialkenntnisse erforderlich wären.

Als besonders vorteilhaft erweist es sich, dass es möglich ist, den Sensor mit einem hohen Automatisierungsgrad herzustellen, wobei sich durch variable Einsätze in einer Spritzgussform Querschnitt und Länge des Sensors optimieren lassen.

## Patentansprüche

1. Verfahren zur Herstellung eines Gehäuses für Sensorelemente mit wenigstens einem Kunststoff aufweisenden äußeren Gehäuseteil, **dadurch gekennzeichnet, dass** das Gehäuse im Zwei-Komponenten-Spritzguss-Verfahren hergestellt wird, wobei in einem ersten Verfahrensschritt das Sensorelement nur von einer weichen Kunststoffkomponente (1) umspritzt und in einem zweiten Verfahrensschritt eine zweite Kunststoffkomponente (5) aufgebracht wird, die als harte Kunststoffkomponente das äußere Gehäuse für das Sensorelement bildet.

2. Verfahren nach Anspruch 1, **dadurch gekennzeichnet, dass** das Sensorelement zusammen mit wenigstens zwei Anschluss-Leitern (11) versehen ist, die wenigstens teilweise von der weichen Kunststoffkomponente (1) umspritzt werden.

3. Verfahren nach Anspruch 2, **dadurch gekennzeichnet, dass** die Anschlussleiter (11) des Sensorelements zusammen mit Verbindungspunkten für eine äußere Zuleitung von der weichen Kunststoffkomponente (1) umspritzt werden.

4. Verfahren nach einem der Ansprüche 1 bis 3, **dadurch gekennzeichnet, dass** im ersten Verfahrensschritt das Sensorelement mit einem Elastomer oder Elast umspritzt wird.

5. Sensor mit einem Sensorelement, das von einem, wenigstens eine Kunststoffkomponente aufweisenden Gehäuse umgeben ist, **dadurch gekennzeichnet, dass** das Sensorelement (2) nur von einer weichen Kunststoffkomponente (1) umhüllt ist, die ihrerseits in einer als äußeres Gehäuse dienenden Kunststoffkomponente (5) als Umspritzung aus einem harten Material angeordnet ist.

6. Sensor nach Anspruch 5, **dadurch gekennzeichnet, dass** das Sensorelement ein Messwiderstand (2) aus einem Substrat mit elektrisch isolierender Oberfläche und darauf befindlicher Widerstandsschicht ist.

7. Sensor nach Anspruch 5 oder 6, **dadurch gekennzeichnet, dass** das Sensorelement bzw. der Messwiderstand (2) über wenigstens zwei Anschluss-Leiter (11) mit einer von außen anschließbaren Auswerteschaltung verbunden ist, wobei die Anschlussleiter wenigstens teilweise von der weichen Kunststoffkomponente (1) umhüllt sind.

8. Sensor nach Anspruch 7, **dadurch gekennzeichnet, dass** die Anschluss-Leiter (11) sowohl durch die weiche Kunststoffkomponente (1) als auch durch die harte Kunststoffkomponente (5) geführt sind.

9. Sensor nach Anspruch 7 oder 8, **dadurch gekennzeichnet, dass** wenigstens ein Ende eines Anschlussleiters mit einem Ende eines Steckers mechanisch und elektrisch verbunden ist.

10. Verwendung eines Sensors nach einem der Ansprüche 5 bis 9 als Temperatur-Sensor.

## Claims

1. Method of producing a housing for sensor elements with at least one external housing component which comprises plastic, **characterised in that** the housing is produced using the two-component injection moulding method, wherein, in a first method step, only a soft plastic component (1) is injection moulded around the sensor element and, in a second method step, a second plastic component (5) is applied, which, as a hard plastic component, forms the external housing for the sensor element.

2. Method according to Claim 1, **characterised in that** the sensor element is provided with at least two connection conductors (11), around which the soft plastic component (1) is at least partially injection moulded.

3. Method according to Claim 2, **characterised in that** the soft plastic component (1) is injection moulded around the connection conductors (11) of the sensor element together with connection points for an external supply line.

4. Method according to one of Claims 1 to 3, **characterised in that**, in the first method step, an elastomer is injection moulded around the sensor element.

5. Sensor with a sensor element surrounded by a housing comprising at least one plastic component, **characterised in that** the sensor element (2) is only sheathed by a soft plastic component (1), which itself is arranged in a plastic component (5) acting as an external housing as an injection moulding made from a hard material.

6. Sensor according to Claim 5, **characterised in that** the sensor element is a precision resistor (2) comprising a substrate with an electrically isolating surface and resistance layer located thereupon.

7. Sensor according to Claim 5 or 6, **characterised in that** the sensor element or the precision resistor (2) is connected with an analysis circuit, which can be connected externally, via at least two connection conductors (11), wherein the connection conductors are sheathed at least partially by the soft plastic component (1).

8. Sensor according to Claim 7, **characterised in that** the connection conductors (11) are guided both through the soft plastic component (1) and through the hard plastic component (5).

9. Sensor according to Claim 7 or 8, **characterised in that** at least one end of a connection conductor is connected mechanically and electrically with an end of a plug.

10. Use of a sensor according to one of Claims 5 to 9 as a temperature sensor.

## Revendications

1. Procédé de fabrication d'un boîtier pour éléments de capteurs avec au moins une partie de boîtier extérieure comportant de la matière plastique, **caractérisé en ce que** le boîtier est réalisé dans le procédé de moulage par injection à deux composants, l'élément de capteur, dans une première étape du procédé, n'étant surmoulé que par un composant souple en matière plastique (1) et, dans une deuxième étape du procédé, un deuxième composant en matière plastique (5) étant appliqué, lequel constitue, en tant que composant dur en matière plastique, le boîtier extérieur pour l'élément de capteur.

2. Procédé selon la revendication 1, **caractérisé en ce que** l'élément de capteur est pourvu d'au moins deux conducteurs de raccordement (11) qui sont surmoulés, au moins en partie, par le composant souple en matière plastique (1).

3. Procédé selon la revendication 2, **caractérisé en ce que** les conducteurs de raccordement (11) de l'élément de capteur, conjointement avec des points de connexion pour une ligne d'amenée extérieure, sont surmoulés par le composant souple en matière plastique (1).

4. Procédé selon l'une des revendications 1 à 3, **caractérisé en ce que**, à la première étape du procédé, l'élément de capteur est surmoulé par un élastomère.

5. Capteur avec un élément de capteur qui est entouré d'un boîtier comportant au moins un composant en matière plastique, **caractérisé en ce que** l'élément de capteur (2) n'est enrobé que d'un composant souple en matière plastique (1) qui, de son côté, est situé dans un composant en matière plastique (5), servant de boîtier extérieur, en tant que surmoulage en une matière dure.

6. Capteur selon la revendication 5, **caractérisé en ce que** l'élément de capteur est une résistance de mesure (2) en un substrat avec une surface électriquement isolante et une couche de résistance située dessus.

7. Capteur selon la revendication 5 ou 6, **caractérisé en ce que** l'élément de capteur resp. la résistance de mesure (2) sont reliés par l'intermédiaire d'au moins deux conducteurs de raccordement (11) à un circuit d'évaluation raccordable depuis l'extérieur, les conducteurs de raccordement étant enrobés, au moins en partie, par le composant souple en matière plastique (1).

8. Capteur selon la revendication 7, **caractérisé en ce que** les conducteurs de raccordement (11) passent non seulement par le composant souple en matière plastique (1), mais aussi par le composant dur en matière plastique (5).

9. Capteur selon la revendication 7 ou 8, **caractérisé en ce qu'**au moins une extrémité d'un conducteur de raccordement est reliée mécaniquement et électriquement à une extrémité d'une fiche.

10. Utilisation d'un capteur selon l'une des revendications 5 à 9 en tant que capteur de température.
